# EUROPÄISCHE PATENTSCHRIFT

(11) **EP 1 995 120 B1**
(45) Veröffentlichungstag und Bekanntmachung des Hinweises auf die Patenterteilung: **24.11.2010**
(21) Anmeldenummer: 08003229.5
(22) Anmeldetag: 22.02.2008
(51) Int. Cl.: B60R 13/08

(54) **Strukturbauteil, insbesondere Hitzeschild**
Structural component, in particular heat shield
Composant de structure, en particulier bouclier thermique

(30) Priorität: 25.05.2007 DE 102007024553
(43) Veröffentlichungstag der Anmeldung: 26.11.2008
(73) Patentinhaber: ElringKlinger AG, 72581 Dettingen/Erms (DE)
(72) Erfinder: Zika-Beyerlein, Beate, 90482 Nürnberg (DE); Schölzel, Peter, 91230 Happurg (DE)
(74) Vertreter: Bartels & Partner

(56) Entgegenhaltungen:
- WO-A-2004/045843
- WO-A-2004/098808
- DE-A1- 4 035 177
- DE-A1- 19 849 366
- DE-A1- 19 925 492

## Beschreibung

Die Erfindung betrifft ein Strukturbauteil in Form eines Hitzeschildes, bestehend aus mindestens zwei miteinander verbundenen, übereinander angeordneten Strukturlagen, von denen eine erste Strukturlage eine erste Art von Vertiefungen aufweist, die in Richtung einer zweiten Strukturlage weisen, und von denen die zweite Strukturlage eine zweite Art von Vertiefungen aufweist, die in Richtung der ersten Strukturlage weisen und zumindest teilweise zwischen die erste Art von Vertiefungen eingreifen, wobei die zweite Art von Vertiefungen zumindest teilweise mit einer Perforation versehen sind oder diese selbst ausbilden, und wobei die beiden Strukturagen zwischen den Vertiefungen Flächenbereiche mit im Wesentlichen geschlossener Oberfläche aufweisen.

Strukturbauteile als Hitzeschilder ausgebildet sind in unterschiedlichen Ausführungsformen bekannt und finden insbesondere in der Kraftfahrzeugtechnik weit verbreitete Anwendung. Als Hitzeschild haben solche Strukturbauteile die Aufgabe, die von abgasführenden Teilen von Verbrennungsmotoren, Turboladern oder insbesondere Katalysatoren, durch Strahlung und/oder Konvektion abgegebene Wärme von benachbarten Baukomponenten oder Karosserieteilen abzuhalten. Da die in Frage kommenden; abzuschirmenden Teile nicht nur Wärmequellen sondern auch Schallquellen sind, ist neben der Wärmedämmung auch ein günstiges akustisches Abschirmverhalten äußerst wichtig.

Durch die DE-A-40 35 177 ist ein gattungsgemäßes Hitzeschild zur Abschirmung von abgasführenden Teilen an einem Kraftfahrzeug bekannt, das ein eine Schildvorderseite bildendes Reflektorblech aufweist. In dem Reflektorblech sind in einem Raster mehrere Durchbrechungen angeordnet, wobei hinter jeder Durchbrechung sich an der Schildrückseite eine schallabsorbierende Kammer befindet. Die Kammern selbst werden durch Vertiefungen eines Kammerblechs gebildet, das an dem Reflektorblech angebracht ist. Die genannten Kammern dienen bei der bekannten Lösung der Schallabsorption und verstärken die Wärmedämmung. Um ein Recycling zu ermöglichen, sind vorzugsweise alle Teile des Hitzeschildes aus einem einheitlichen Material hergestellt. Das Reflektorblech ist ferner über eine Vielzahl von Schweißstellen mit dem sog. Kammerblech fest verbunden.

Durch die DE-A-199 25 492 ist ein wärmeabschirmblech bekannt mit zwei makrostrukturierten Blechformteilen als einzelne Strukturlagen. Die beiden makrostrukturierten Blechformteile sind über Schweißverbindungspunkte sowie über Falze in den Randbereichen miteinander verbunden. Die einzelnen Laufrichtungen der makrostrukturierten Blechformteile weichen derart voneinander ab, dass die die Makrostruktur bildenden Vertiefungen unterschiedliche Abstände bzw. Weiten zueinander aufweisen. Bei einer besonders bevorzugten Ausführungsform der bekannten Lösung ist vorgesehen, dass zwischen den makrostrukturierten Blechformteilen noch eine Schicht, bestehend aus mehreren Aluminiumfolien, angeordnet ist, um dergestalt die Wärmeabschirmfunktion zu verbessern. Ferner ist vorgesehen, um einen Wärmestau zwischen den ersten und zweiten makrostrukturierten Blechformteilen zu vermeiden, in den eben verlaufenden Flächenbereichen des ersten Blechformteils, die auf der der Wärme- und Schaliquelle abgewandten Seite nach außen hin verlaufen, Durchgänge in der Art einer Perforation auszubilden.

Aus DE 198 49 366 A1 ist ein Sandwich-Abschirmblech, insbesondere Hitzeschild und/oder Schalldämmelement zum Einsatz beim Verbrennungskraftmotors eines Kraftfahrzeuges, bekannt geworden, welches zwei übereinanderliegende Metallbleche und eine mindestens abschnittsweise zwischen den Metallblechen angeordnete und an diesen haftende, nicht metallische Zwischenschicht aufweist. Die Metallbleche sind mit der Zwischenschicht durch Biegen und/der Prägen räumlich verformt, wobei mindestens eines der Metallbleche vollflächig eine dreidimensionale Struktur, insbesondere eine Beulstruktur, aufweist, die eine Vielzahl gleichartiger, regulär angeordneter Strukturelemente umfasst. Die beiden Metallbleche können eine gleichartige Struktur aufweisen, wobei die Strukturelemente miteinander ausgerichtet sind, durch die zwischen ihnen angeordnete Zwischenlage jedoch nicht ineinander eingreifen. Mindestens eines der Metallbleche weist regulär angeordnete Perforationen auf, die insbesondere jeweils im Zentrum eines Strukturelements platziert sind.

WO 2004/098808 A1 betrifft ein Verfahren zum Herstellen eines Wärmeabschirmbleches für Motorfahrzeuge, Geräte oder Maschinen durch vollflächige dreidimensionale Verformung. Für das Verfahren werden mindestens zwei strukturierte Bleche mit unterschiedlichen Materialstärken und Gesamtdicken verwendet. Ein Werkzeug verformt und verpresst in einem Arbeitsgang die beiden strukturierten Bleche zu einem inneren Strukturblech und einem äußeren Strukturblech. Das Spaltmaß im Werkzeug weist in manchen Breichen eine Dicke auf, die geringer als die Dicke der aufeinander gelegten strukturierten Bleche ist. Dadurch verzahnen und verkeilen sich die Strukturen der Bleche mindestens teilweise ineinander und verspannen sich durch Scherung und/oder Verformung. Die Verformung wird vorzugsweise in einem einzigen Arbeitsgang und in einem einzigen Werkzeug durchgeführt. Die Strukturen der Bleche sind derart versetzt bzw. unterschiedlich, dass die Bleche beim Aufeinanderlegen nicht weit ineinander eingreifen können und folglich eine Gesamtdicke ergeben, die vorzugsweise mindestens 80% von der Summe der beiden Strukturdickeh beträgt.

WO 2004/045843 A2 offenbart einen schallisolierenden Hitzeschutzschild, insbesondere für Kraftfahrzeuge, der einen aus Aluminium hergestellten Träger, eine Schallabsorptionsschicht und eine aus Aluminium hergestellte Wärmeabschirmung aufweist. Um ein einfaches Recycling zu ermöglichen sowie eine hohe Wärmeabschirmwirkung als auch ein hohes Schalabsorptionsvermögen zu erzielen, wird vorgeschlagen, als Schallabsorptionsschicht eine durchlässige Matte aus Aluminiumgewirke zu verwenden, wobei das Aluminiumgewirke mehrlagig übereinandergelegt und zu der durchlässigen Matte verpresst ist. Der derartige Hitzeschutzschild stellt somit ein Einstoffprodukt dar. Der Träger besteht vorzugsweise aus einem mikroperforierten Aluminiumblech, wobei die Wärmeabschirmung vorzugsweise aus Aluminiumfolie hergestellt ist. Der Träger weist eine Vielzahl von Schalldurchlassöffnungen auf.

Durch die EP-A-0 806 555 ist ein Hitzeschild, insbesondere zur Abschirmung abgasführender Teile in Kraftfahrzeugen, bekannt mit mindestens einer zwischen zwei Decklagen angeordneten metallischen Dämmlage, wobei die mindestens eine Dämmlage von einem mittels einer Vielzahl von Durchstoßungen strukturierten Blechteil oder einer Folie gebildet ist, und wobei der Grat der Durchstoßungen geschlitzt, zackenförmig oder zungenförmig ist. Die genannten Gratteile bewirken dabei lediglich bei der bekannten Lösung punktförmige Wärmekontakte zu benachbarten Lagen bzw. zu den vorzugsweise ebenfalls aus Metall bestehenden Decklagen. Sofern die Grate vorteilhafterweise nach außen umgebogen sind, bewirken diese eine punktuelle Verdoppelung der Materialstärke des Blechteils oder der Folie.

Durch die DE-C-197 23 943 ist ebenfalls ein Hitzeschild bekannt mit einer zwischen zwei Blechdecklagen mittig angeordneten Dämmlage in Form eines Zackenbleches mit Durchstoßungen in der Art einer Perforation nach beiden Richtungen, also zu der jeweiligen Decklage hin orientiert. In Fortbildung zu der vorstehend beschriebenen Lösung wird ein Teil der durch die Perforation entstehenden Zackengrate zur Verbindung der beiden! Deckblechlagen miteinander verwendet, wohingegen die weiteren Grat- oder Zackenteile sich mit einem vorgesehen Abstand zwischen den beiden Decklagen eingriffsfrei zu diesen erstrecken. Dergestalt entstehen innerhalb eines Abschirmteiles kleinere Bereiche mit der genannten Zackenverbindung und größere Abschirmbereiche ohne einen dahingehenden Eingriff.

Durch das DE-U-203 193 910 ist ein akustisch wirksames Hitzeschild bekannt, bestehend aus mindestens zwei Metallfolien, vorzugsweise aus Aluminium, die jeweils eine Vielzahl noppenartiger Prägestellen aufweisen, wobei mindestens eine der Metallfolien perforiert ist. Die perforierte Metallfolie weist eine Vielzahl von Löchern mit einem durchschnittlichen Lochdurchmesser im Bereich von 0,05 bis 0,9 mm auf, wobei die Löcher in einer Dichte von mindestens 15 Löcher je cm² in der Metallfolie angeordnet sind, und wobei die perforierte Metallfolie einseitig, vorzugsweise ganzflächig, mit einer oberhalb von 120°C wärmeaktivierbaren Klebeschicht versehen ist, die eine entsprechende Perforierung aufweist. Bei der bekannten Strukturbauteil-Lösung stoßen die noppenartigen Prägestellen der beiden Strukturlagen in Form der Metallfolien aneinander an und im Querschnitt gesehen bildet die jeweilige Metallfolie jeweils eine Wellenform aus, wobei die Einzelwellen in unmittelbarer Aufeinanderfolge ineinander übergehen.

Im Hinblick auf diesen Stand der Technik stellt sich die Erfindung die Aufgabe, ein Strukturbauteil zu schaffen, das wenig Einbauraum benötigt und bei einfacher Bauweise eine kostengünstige Herstellung ermöglicht, funktionssicher im Gebrauch ist sowie neben einer guten, wärmedämmenden Wirkung auch eine sehr wirksame Schalldämmung ermöglicht.

Erfindungsgemäß ist diese Aufgabe durch ein Strukturbauteil gelöst, das die Merkmale des Patentanspruches 1 in seiner Gesamtheit aufweist.

Das erfindungsgemäße Strukturbauteil in Form des Hitzeschildes ist gemäß dem kennzeichnenden Teil des Patentanspruches 1 dadurch charakterisiert, dass die Eindringtiefe der Vertiefungen von erster und zweiter Art wesentlichen gleich ist, und dass die Anzahl von Vertiefungen der ersten Art größer ist als die Anzahl von Vertiefungen der zweiten Art bezogen auf einen vorgebbaren bzw. betrachteten Flächenabschnitt der Gesamt-Strukturlagen.

Dabei ist die eine Strukturlage mit der ersten Art von Vertiefungen bevorzugt auf der der Schall- und/oder Hitzequelle abgewandten Seite angeordnet. Die ansonsten geschlossene, vorzugsweise einen ebenen Flächenbereich bildende Oberfläche mit der ersten Art von Vertiefungen läßt sich dann in Abhängigkeit des jeweiligen Anwendungsfalles derart strukturieren, dass sowohl die Eindringtiefe als auch die Form der jeweiligen Vertiefung sowie der Abstand zwischen den einzelnen benachbarten Vertiefungen variabel gestaltet werden kann. Als Folge der derart erhaltenen Strukturierung werden die durch die einzelnen Isolierlagen des als Sandwich aufgebauten Strukturteils eingebrachten Schallwellen an der Innenseite der ersten Strukturlage nicht in gleicher Richtung reflektiert, wie sie dort auftreffen, sondern gebrochen und mithin diffus zurückgeworfen. Das bedeutet zum einen, dass die jeweils reflektierte Schallwelle eine größere Strecke durch den derart gebildeten Absorber nimmt und ihr damit mehr Energie entzogen werden kann, und zum anderen, dass es im Bereich der originären Schallquelle zu weniger Überschneidungen und mithin nicht zu einer Summation der ausgesendeten und reflektierten Schallwellen kommen kann.

Aufgrund des wechselweise Eingriffes in die durch die jeweilige Art von Vertiefungen von erster und zweiter Strukturlage gebildeten Abstände ist die erfindungsgemäße Strukturbauteil-Lösung von ihrer Einbauhöhe her gleichbleibend und mithin platzsparend auslegbar, wozu auch mit beiträgt, dass für die Wirksamkeit der Abschirmung keine zusätzlichen Bauteile, wie Zwischenfolien zwischen den Strukturlagen, notwendig sind. Da auf den Einsatz von zusätzlichen Klebe- oder sonstigen Verbindungsstellen, wie Schweißpunkten, zur Verbindung der Strukturlagen miteinander verzichtet werden kann, läßt sich das erfindungsgemäße Strukturbauteil nicht nur ausgesprochen kostengünstig herstellen, sondern ist auch bei Hochtemperaturanwendungen funktionssicher im Gebrauch; also bei Temperaturbereichen, wo Klebestellen sich auflösen oder Schweißverbindungspunkte durch "Verzundern" versagen können.

Die nach außen hin im wesentlichen geschlossen verlaufenden Flächenbereiche der jeweiligen Strukturlage, die insoweit nur von den Vertiefungen und/oder von der jeweiligen Perforation unterbrochen sind, führen zu einer insgesamt beulsteifen Gesamtkonstruktion und dennoch lassen sich die Strukturlagen durch entsprechendes Verformen aufgrund der relativ flexibel gehaltenen, durchgehenden Flächenbereiche gut vor Ort an die Gegebenheiten anpassen, indem man das Strukturbauteil durch Biegen der Außenkontur der jeweiligen Wärme- und Schallquelle anpaßt, beispielsweise gebildet durch einen Abgaskrümmer eines abgasführenden Teils, der Außenkontur einer Katalysatoreinrichtung etc..

Bei einer bevorzugten Ausführungsform des erfindungsgemäßen Strukturbauteils ist vorgesehen, dass die erste und die zweite Art von Vertiefungen in gleichmäßig verteilten Gruppen auf der jeweils zugeordneten Strukturlage angeordnet sind und dass die jeweiligen Gruppen zueinander als auch die Vertiefungen einer Gruppe untereinander im wesentlichen jeweils den gleichen Abstand aufweisen. Besonders bevorzugt ist vorgesehen, dass jeweils eine Gruppe von vier Vertiefungen der ersten oder zweiten Art eine einzelne Vertiefung der zweiten bzw. der ersten Art zwischen sich aufnimmt. Durch die gleichmäßige Abstandsbildung der Gruppen untereinander unter Einbezug, dass in Draufsicht Teile der Vertiefungen der ersten und zweiten Art sich in Eckbereichen mit vorzugsweise rechteckförmiger, insbesondere quadratischer Fläche überdecken, hat sich vom Schwingungsverhalten her ein besonders gutes Absorptionsverhalten ergeben.

Vorzugsweise ist ferner vorgesehen, dass als Dämmschicht und Isolierlage zwischen den einzelnen Strukturlagen, vorzugsweise gebildet aus einem Blechwerkstoff, eine akustisch hochwirksame, hochtemperaturbeständige Isolierlage vorgesehen ist. Der Verbund der Strukturlagen im Sandwichaufbau wird vorzugsweise mittels einer Bördelung der unperforierten ersten Strukturlage als Außenlage hergestellt.

Aufgrund der speziellen Strukturierung, bei der der Schalleintritt über die zweite Art von Vertiefungen der zweiten Strukturlage ins Innere des Sandwichaufbaues sichergestellt ist, ergibt sich insbesondere in Verbindung mit einer akustisch hochwirksamen Isolierung eine deutlich verbesserte akustische Abschirmwirkung über einen weiten Anregungsbereich, wobei die zweite Art von Vertiefungen mit ihrem freien Öffnungseintritt der jeweiligen Schall- und/oder Hitzequelle zugewandt ist. Trotz der deutlich verbesserten akustischen Abschirmwirkung läßt sich das erfindungsgemäße Struktrbauteil für thermisch hoch belastete Einsatzbereiche, vorzugsweise innerhalb von Kraftfahrzeugen, einsetzen.

Bei einer besonders bevorzugten Ausführungsform des erfindungsgemäßen Strukturbauteils ist die jeweilige erste und zweite Art von Vertiefungen trichterförmig ausgebildet. Vorzugsweise ist dabei der jeweilige Boden der ersten Art von Vertiefungen genoppt ausgeführt, wobei zumindest bei einern Teil der Böden der zweiten Art an Vertiefungen als Perforation jeweils ein Durchgang vorhanden ist, der auch begrenzbar ist durch die trichterförmige Vertiefung selbst. Aufgrund der Verwendung von Strukturtrichtern läßt sich zum einen der auf das Strukturbauteil auftreffende Schall gut innerhalb der Sandwichstruktur integrieren und mit entsprechend langen Laufzeiten diffus streuen, was zu sehr guten Schalldämmwerten für das Strukturbauteil führt. Vorteilhafterweise erstrecken sich beide Arten von Vertiefungen entlang fiktiver Verbindungslinien, die im Wesentlichen senkrecht aufeinander stehen und gleiche Abstände zueinander einhalten. Weiter ist es vorteilhaft, dass die Flächenbereiche der Strukturlagen zueinander parallel verlaufend angeordnet sind und einen gleichförmigen Einbauabstand zueinander einnehmen.

Weitere vorteilhafte Ausgestaltungen des erfindungsgemäßen Strukturbauteils sind Gegenstand der sonstigen Unteransprüche.

Nachstehend wird die Erfindung anhand von Zeichnungen erläutert, die nicht das kennzeichnende Merkmal zeigen, daß die Anzahl von Vertiefungen der ersten Art bezogen auf einen vorgebbaren Flächenabschnitt größer ist als die Anzahl von Vertiefungen der zweiten Art es zeigen.
- Fig.1: eine abgebrochen gezeichnete Teildraufsicht auf die erste Strukturlage des Strukturbauteils in entsprechender Vergrößerung;
- Fig.2: eine abgebrochen gezeichnete Teildraufsicht auf die Unterseite der zweiten Strukturlage des Strukturbauteils;
- Fig.3: eine Teildraufsicht auf die erste Strukturlage gemäß der Fig.1 mit darunter deckungsgleich angeordneter zweiter Strukturlage nach der Fig.2;
- Fig.4: einen teilweise dargestellten Schnitt längs der Linie III - III in Fig.1;
- Fig.5: eine Seitenansicht auf eine Isolierlage, wie sie zwischen die einzelnen Strukturlagen des Strukturbauteils eingesetzt ist, wie sie jedoch in Fig.3 der besseren Darstellung wegen weggelassen wurde;
- Fig.6 und 7: in Seitenansicht zwei verschiedene Ausführungsformen von Strukturlagen, wie sie bei einer Lösung nach den Fig.1 bis 3 einsetzbar sind.

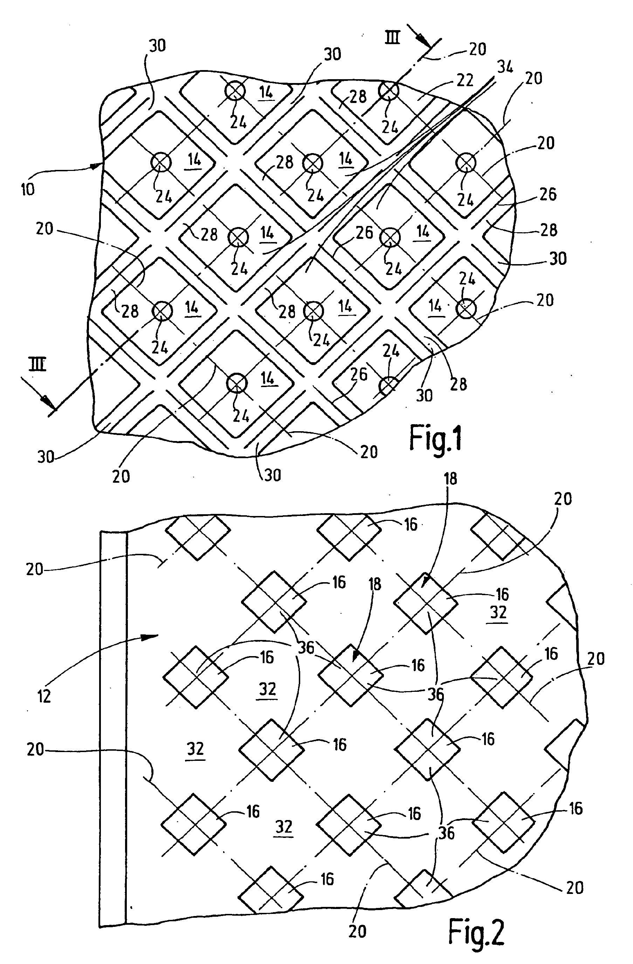

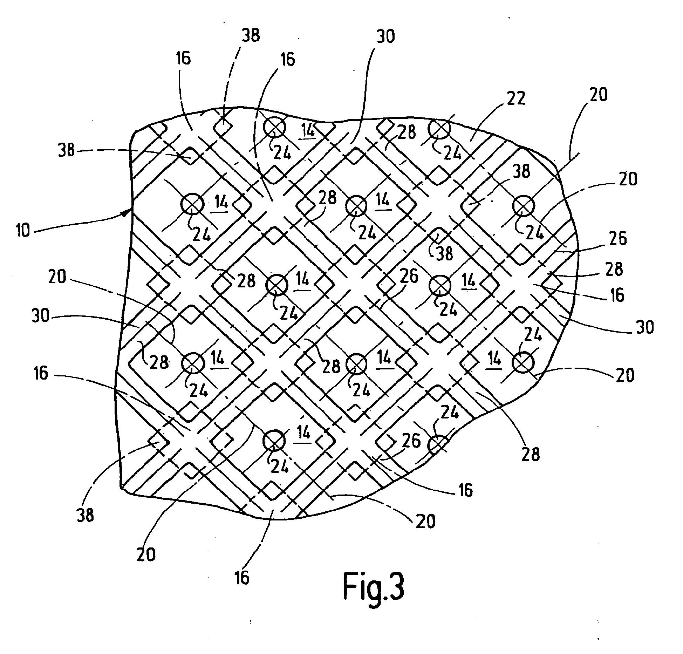

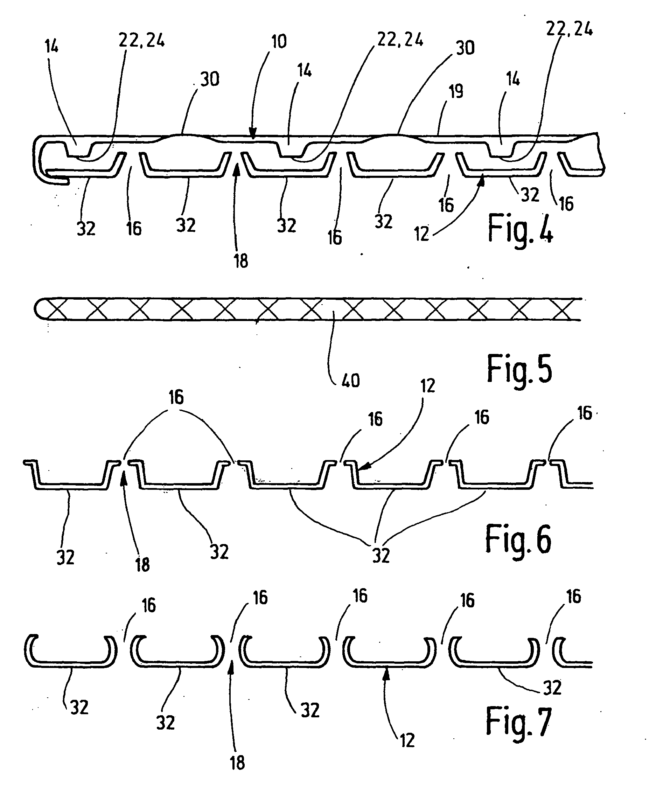

Das erfindungsgemäße Strukturbauteil, insbesondere ausgebildet in der Art eines schalldämmenden Hitzeschildes, besteht im wesentlichen aus zwei miteinander verbindbaren Strukturlagen 10,12, wobei in der Fig.1 die obere Strukturlage 10 dargestellt ist, in Fig.2 die untere Strukturlage 12, in Fig.3 die Übereinanderanordnung von erster und zweiter Strukturlage 10,12 und in Fig.4 in Seitendarstellung der randnahe Verbund aus erster Strukturlage 10 und zweiter Strukturlage 12. In praxisnahen Anwendungsfällen ist die obere eine Strukturlage 10 der jeweiligen Schall- und Wärmequelle abgewandt stationär angeordnet und die weitere zweite Strukturlage 12 dieser Quelle zugewandt festgelegt. Die erste Strukturlage 10 weist eine erste Art von Vertiefungen 14 auf, die, wie dies insbesondere die Fig.3 zeigt, in Richtung der anderen Strukturlage 12 weist, wobei die andere Strukturlage 12 eine zweite Art von Vertiefungen 16 aufweist, die in Richtung der ersten Strukturlage 10 weist und die zumindest teilweise mit einer Perforation (als Ganzes mit 18 bezeichnet) versehen ist. Beide Arten von Vertiefungen 14,16 erstrecken sich entlang fiktiver Verbindungslinien 20, die im wesentlichen senkrecht aufeinanderstehen und gleiche Abstände zueinander einhalten. Dergestalt ergibt sich eine Art Rasterverteilungsmaß, das in Abhängigkeit des jeweiligen Anwendungsfalles für das Strukturbauteil frei wählbar ist.

Wie insbesondere die Fig.4 zeigt, ist die jeweilige erste und zweite Art von Vertiefungen 14,16 trichterförmig ausgebildet, wobei der jeweilige Boden 22 der ersten Art von Vertiefungen 14 genoppt ausgeführt ist und die einzelnen Bodennoppen 24 haben, wie dies insbesondere die Fig.1 zeigt, eine kreiszylindrische Form. Die Trichterform für die erste Art von Vertiefungen 14 ist napfförmig eingeprägt, wobei die dahingehende Napfform sich sehr gut mittels eines üblichen Umformvorganges erhalten läßt, der insbesondere dann in Frage kommt, wenn die jeweilige Strukturlage 10,12 aus einem formbaren Blechwerkstoff - auch in Edelstahlausführung - besteht. Wie sich weiter aus der Fig.1 ergibt, sind die Vertiefungen 14 der ersten Art von vorstehenden Wandabschnitten begrenzt, die sich entlang von Begrenzungslinien 26 erstrecken, die im vergleichbaren Rastermaß wiedie fiktiven Verbindungslinien 20 sich parallel zu diesen längs der Strukturlage 10 erstrecken. Die genannten Wandabschnitte bilden rippenartig ausgebildete Flächenabschnitte 28 aus, die die obere Strukturlage 10 entsprechend aussteifen und insoweit Vibrationen beim Einsatz des Strukturbauteils entgegenwirken können.

Für eine gute Dämpfungswirkung hat es sich als günstig erwiesen, die Eindringtiefe der Vertiefungen von erster und zweiter Art 14,16 im wesentlichen gleich auszubilden (vgl. Fig.4), wobei die Anzahl von Vertiefungen der ersten Art 14 größer gewählt ist als die Anzahl von Vertiefungen der zweiten Art 16, was sich günstig auf die Diffusoreigenschaften des Strukturbauteils auswirkt. Wie sich insbesondere aus der Fig.2 ergibt, sind die Vertiefungen der zweiten Art 16 im Querschnitt gesehen rechteckförmig, insbesondere quadratisch ausgebildet und mittels eines Einstichwerkzeuges derart bodenseitig durchgestoßen (Spießung), dass die Perforation 18, bestehend aus quadratischen Einzeldurchgängen oder Durchlässen, direkt von der Trichterbegrenzungswand gebildet ist. In Abkehr hiervon besteht aber auch für eine geänderte Ausführungsform der Strukturlage 12 die Möglichkeit gemäß Darstellung nach der Fig.6, Teile des Bodens bestehen zu lassen und vorzugsweise mittig in den Boden die Perforation 18 einzubringen.

Bei einer weiteren Ausführungsform nach der Fig.7 für die Strukturlage 12 besteht auch die Möglichkeit, den eingebrachten Trichter mit seinen Begrenzungswandabschnitten nach innen erweiternd vorzusehen, so dass im Querschnitt gesehen eine Art Rotations-Hyperboloid, gebildet durch die Trichterwandabschnitte, entsteht. Auch die dahingehende Hyperboloidform hat sich für die Schalldämmung als günstig erwiesen. Die jeweilige Vertiefung kann aber auch einen rhombisch-stumpfpyramidalen Ausschnitt bilden. Der jeweilige Ausschnitt kann für die zweite Strukturlage 12 die Perforation 18 bilden; es besteht aber auch die Möglichkeit, eine dahingehende Vertiefung 16 herzustellen und dann anschließend in die freie Stirnseite die Perforation (nicht dargestellt) einzubringen.

Zwischen den Vertiefungen 14 und 16 weisen die beiden Strukturlagen 10,12 Flächenbereiche 30,32 mit im wesentlichen geschlossener Oberfläche auf. Gemäß der Ausführungsform nach den Fig.1 bis 4 ist das Strukturbauteil als eben verlaufende Platte ausgebildet, so dass die Flächenbereiche 30,32 zueinander parallel verlaufend angeordnet sind und einen gleichförmigen Einbauabstand zueinander einnehmen. Die dahingehend gezeigte Anordnung kann aber auch in nahezu beliebige dreidimensionale Strukturen (nicht dargestellt) als Gesamt-Strukturbauteil verformt werden, um dergestalt an wärme- und/oder schallerzeugende Einrichtungen angepaßt zu werden, um beispielsweise der Außenkontur eines Abgaskrümmers, eines Katalysators od.dgl. nachzufolgen.

Wie die Fig.1 zeigt, ist die erste Art von Vertiefungen 14 gleichförmig über die erste Strukturlage 10 verteilt und bildet ausschnittsweise erste Gruppen 34 mit je vier Vertiefungen 14 aus. Ebenso kann man gemäß der Darstellung nach der Fig.2 die Vertiefungen 16 der zweiten Art in zweite Gruppen 36 mit jeweils vier benachbart zueinander angeordneten Gruppenmitgliedern in Form der Vertiefungen 16 der zweiten Art betrachten. Wie sich weiter aus den Fig.1 und 2 ergibt, nehmen die jeweiligen Gruppenmitglieder in Form der Einzelvertiefungen innerhalb einer jeden Gruppe 34,36 den gleichen Abstand voneinander ein. Das angesprochene gleiche Abstandsmaß zwischen gleichen Gruppenmitgliedern und Gruppenmitgliedern verschiedener Art ergibt sich auch aus der Draufsichtsdarstellung nach der Fig.3, bei der die beiden Strukturlagen 10,12 in Übereinanderanordnung dargestellt sind. Vom Schwingungsabsorptionsverhalten hat es sich dabei als besonders günstig erwiesen, wenn gemäß der Darstellung nach der Fig.3 Teile der Vertiefungen der ersten und zweiten Art 14,16 sich in Eckbereichen 38 miteinander überdecken mit vorzugsweise rechteckförmiger, insbesondere quadratischer Fläche.

Vorzugsweise ist ferner vorgesehen, zwischen den beiden Strukturlagen 10,12 mindestens eine Isolierschicht 40 einzubringen, wie sie exemplarisch in der Fig.5 dargestellt ist. Die vorzugsweise aus einem Faser- oder Vliesmaterial bestehende Isolierschicht 40 kann als Lage im Sinne eines Sandwiches zwischen den beiden Strukturlagen 10,12 angeordnet sein; es besteht aber auch die Möglichkeit, den gesamten Hohlraum zwischen den beiden Strukturlagen 10,12, beispielsweise mittels eines Einspritzvorganges, mit einer Isolierlage 40 auszustatten. Dahingehende Isolierlagen 40 sind in einer Vielzahl von Ausführungsformen auf dem Markt frei erhältlich, so dass an dieser Stelle hierauf nicht mehr näher eingegangen wird. Da die weitere zweite Strukturlage 12 gleichfalls aus einem Blechteil besteht, beispielsweise in Form eines Stanzteiles, läßt sich auch die gesamte Struktur, also das Strukturbauteil, entlang vorgebbarer Konturverläufe verbiegen, beispielsweise in der Art einer Halbschale und dergleichen mehr ausgestalten.

Mit dem erfindungsgemäßen Strukturbauteil ist ein hochwirksames schallisolierendes Dämm-Mittel dem Konstrukteur an die Hand gegeben, das im übrigen auch problemlos den thermischen Anforderungen im Hinblick auf eine lang andauernde Beständigkeit gerecht wird.

## Patentansprüche

1. Strukturbauteil in Form eines Hitzeschildes, bestehend aus
- mindestens zwei miteinander verbundenen, übereinander angeordneten Strukturlagen (10,12),
- von denen eine erste Strukturlage (10) eine erste Art von Vertiefungen (14) aufweist, die in Richtung einer zweiten Strukturlage (12) weisen, und
- von denen die zweite Strukturlage (12) eine zweite Art von Vertiefungen (16) aufweist, die in Richtung der ersten Strukturlage (10) weisen und zumindest teilweise zwischen die erste Art von Vertiefungen (14) eingreifen,
- wobei die zweite Art von Vertiefungen (16) zumindest teilweise mit einer Perforation (18) versehen sind oder diese selbst ausbilden und
- wobei die beiden Strukturlagen (10,12) zwischen den Vertiefungen (14,16) Flächenbereiche (30,32) mit im Wesentlichen geschossener Oberfläche aufweisen,
- **dadurch gekennzeichnet, dass** die Eindringtiefe der Vertiefungen von erster und zweiter Art (14,16) im Wesentlichen gleich ist, und
- dass die Anzahl von Vertiefungen der ersten Art (14) bezogen auf einen vorgebbaren Flächenausschnitt größer ist als die Anzahl von Vertiefungen (16) der zweiten Art.

2. Strukturbauteil nach Anspruch 1, **dadurch gekennzeichnet, dass** die erste und die zweite Art von Vertiefungen (14,16) in gleichmäßig verteilten Gruppen (34,36) auf der jeweils zugeordneten Strukturlage (10, 12) angeordnet sind und dass die jeweiligen Gruppen (34,36) zueinander als auch die Vertiefungen (14, 16) einer Gruppe (34,36) untereinander im wesentlichen jeweils den gleichen Abstand aufweisen.

3. Strukturbauteil nach Anspruch 2, **dadurch gekennzeichnet, dass** jeweils eine Gruppe (34,36) von vier Vertiefungen der ersten oder zweiten Art (14,16) eine einzelne Vertiefung der zweiten bzw. der ersten Art (16,14) zwischen sich aufnimmt.

4. Strukturbauteil nach Anspruch 3, **dadurch gekennzeichnet, dass** in dessen Draufsicht Teile der Vertiefungen der ersten und zweiten Art (14, 16) sich in Eckbereichen (38) mit vorzugsweise rechteckförmiger, insbesondere quadratischer Fläche überdecken.

5. Strukturbauteil nach einem der Ansprüche 1 bis 4, **dadurch gekennzeichnet, dass** die jeweilige erste und zweite Art von Vertiefungen (14,16) trichterförmig ausgebildet sind.

6. Strukturbauteil nach Anspruch 5, **dadurch gekennzeichnet, dass** der jeweilige Boden (22) der ersten Art von Vertiefungen (14) genoppt ausgeführt ist, insbesondere eine kreiszylindrische Form hat.

7. Strukturbauteil nach Anspruch 5 oder 6, **dadurch gekennzeichnet, dass** zumindest bei einem Teil der Böden der zweiten Art von Vertiefungen (16) diese als Perforation (18) jeweils einen Durchgang aufweisen, der auch begrenzbar ist durch die trichterförmige Vertiefung selbst.

8. Strukturbauteil nach einem der Ansprüche 1 bis 7, **dadurch gekennzeichnet, dass** beide Arten von Vertiefungen (14, 16) sich entlang fiktiver Verbindungslinien (20) erstrecken, die im Wesentlichen senkrecht aufeinander stehen und gleichen Abstände zueinander einhalten.

9. Strukturbauteil nach einem der Ansprüche 1 bis 8, **dadurch gekennzeichnet, dass** die Vertiefungen der zweiten Art (16) im Querschnitt rechteckförmig, insbesondere quadratisch ausgebildet sind.

10. Strukturbauteil nach einem der Ansprüche 1 bis 9, **dadurch gekennzeichnet, dass** die Vertiefungen der ersten Art (14) von vorstehenden Wandabschnitten begrenzt sind, die sich zumindest teilweise entlang von Begrenzungslinien (26) erstrecken, die rippenartig ausgebildete Flächenabschnitte (28) innerhalb der einen Strukturlage (10) bilden.

11. Strukturbauteil nach einem der Ansprüche 1 bis 10, **dadurch gekennzeichnet, dass** die Vertiefung der ersten Art (14) in freie Abstände zwischen den Vertiefungen der zweiten Art (16) eingreifen und diese wiederum in die freien Abstände der Vertiefungen der ersten Art (14).

12. Strukturbauteil nach einem der Ansprüche 1 bis 11, **dadurch gekennzeichnet, dass** zwischen den beiden Strukturlagen (10,12) mindestens eine Isolierschicht (40) eingebracht ist.

13. Strukturbauteil nach einem der vorhergehenden Ansprüche, **dadurch gekennzeichnet, dass** die Flächenbereiche (30, 32) der Strukturlagen (10, 12) zueinander parallel verlaufend angeordnet sind und einen gleichförmigen Einbauabstand zueinander einnehmen.

## Claims

1. A structural component in the form of a heat shield, comprising
- at least two structural layers (10, 12) connected to one another and arranged one above the other,
- of which a first structural layer (10) has a first type of recesses (14) which point in the direction of a second structural layer (12), and
- of which the second structural layer (12) has a second type of recesses (16) which point in the direction of the first structural layer (10) and engage at least partially between the first type of recesses (14),
- the second type of recesses (16) are provided at least partially with a perforation (18) or form the latter themselves, and
- the two structural layers (10, 12) between the recesses (14, 16) having surface areas (30, 32) with a substantially closed surface,
- **characterised in that** the penetration depth of the recesses of the first and second type (14, 16) is substantially equal, and
- that the number of recesses of the first type (14) in relation to a pre-specifiable surface section is greater than the number of recesses (16) of the second type.

2. The structural component according to Claim 1, **characterised in that** the first and the second type of recesses (14, 16) are arranged in evenly distributed groups (34, 36) on the respectively assigned structural layer (10, 12), and that the respective groups (34, 36) are respectively substantially the same distance apart from one another as the recesses (14, 16) of a group (35, 36) in relation to one another.

3. The structural component according to Claim 2, **characterised in that** one respective group (34, 36) of four recesses of the first or second type (14, 16) accommodates between it an individual recess of the second or the first type (16, 14).

4. The structural component according to Claim 3, **characterised in that** in the top view of the latter, parts of the recesses of the first and second type (14, 16) overlap in corner regions (38) with a preferably rectangular, in particular square area.

5. The structural component according to any of Claims 1 to 4, **characterised in that** the respective first and second type of recesses (14, 16) are funnel-shaped.

6. The structural component according to Claim 5, **characterised in that** the respective base (22) of the first type of recesses (14) is dimpled, and in particular is circular-cylindrical in form.

7. The structural component according to Claim 5 or 6, **characterised in that** at least with part of the bases of the second type of recesses (16), the latter respectively have as a perforation (18) a passage which can also be limited by the funnel-shaped recess itself.

8. The structural component according to any of Claims 1 to 7, **characterised in that** the two types of recesses (14, 16) extend along virtual connecting lines (20) which are substantially perpendicular in relation to one another and are equal distances apart from one another.

9. The structural component according to any of Claims 1 to 8, **characterised in that** the recesses of the second type (16) are designed with a rectangular, in particular square cross-section.

10. The structural component according to any of Claims 1 to 9, **characterised in that** the recesses of the first type (14) are limited by projecting wall sections which extend at least partially along limitation lines (26) which form rib-like surface sections (28) within the one structural layer (10).

11. The structural component according to any of Claims 1 to 10, **characterised in that** the recesses of the first type (14) engage in free spaces between the recesses of the second type (16), and the latter in turn in the free spaces of the recesses of the first type (14).

12. The structural component according to any of Claims 1 to 11, **characterised in that** at least one insulating layer (40) is inserted between the two structural layers (10, 12).

13. The structural component according to any of the preceding claims, **characterised in that** the surface areas (30, 32) of the structural layers (10, 12) are disposed extending parallel to one another and adopt a uniform fitted distance in relation to one another.

## Revendications

1. Composant de structure sous la forme d'un bouclier thermique, constitué de
- au moins deux couches (10, 12) de structure reliées entre elles et superposées,
- dont une première couche (10) de structure a un premier type de cavités (14), qui sont tournées dans la direction d'une deuxième couche (12) de structure, et
- dont la deuxième couche (12) de structure à un deuxième type de cavités (16), qui sont tournées dans la direction de la première couche (10) de structure et qui pénètrent au moins en partie entre le premier type de cavités (14),
- dans lequel le deuxième type de cavités (16) sont munies au moins en partie d'une perforation (18) ou la forment elles-mêmes, et
- dans lequel les deux couches (10, 12) de structure ont entre les cavités (14, 16) des parties (30, 32) de surface ayant une surface sensiblement fermée,
- **caractérisé en ce que** les profondeurs de pénétration des cavités du premier et du deuxième type (14, 16) sont sensiblement égales, et
- **en ce que** le nombre des cavités du premier type (14) rapporté a une partie de surface pouvant être prescrite est plus grand que le nombre de cavités (16) du deuxième type.

2. Composant de structure suivant la revendication 1, **caractérisé en ce que** le premier et le deuxième types de cavités (14, 16) sont disposés en des groupes (34, 36) répartis de manière uniforme sur la couche (10, 12) de structure (10, 12) associées respectivement et **en ce que** les groupes (34, 36) respectifs sont les uns par rapport aux autres ainsi qu'également les cavités (14, 16) d'un groupe (34, 36) entre eux sont essentiellement respectivement à la même distance.

3. Composant de structure suivant la revendication 2, **caractérisé en ce que** respectivement un groupe (34, 36) de quatre cavités du premier ou du deuxième type (14, 16) reçoivent entre elles une cavité individuelle du deuxième ou du premier type (16, 14).

4. Composant de structure suivant la revendication 3, **caractérisé en ce que**, dans sa vue en plan, des parties des cavités de premier et du deuxième type (14, 16) se recouvrent dans des zones (38) de coin, en ayant, de préférence, une surface rectangulaire, notamment carrée.

5. Composant de structure suivant l'une des revendications 1 à 4, **caractérisé en ce que** le premier et le deuxième type respectif de cavités (14, 16) sont en forme d'entonnoir.

6. Composant de structure suivant la revendication 5, **caractérisé en ce que** le fond (22) respectif du premier type de cavités (14) est bossué, en ayant notamment une forme de cylindre circulaire.

7. Composant de structure suivant la revendication 5 ou 6, **caractérisé en ce qu'**au moins pour une partie de fond du deuxième type de cavités (16), celles-ci ont comme perforation (18) respectivement un passage qui peut être aussi délimité par la cavité elle-même en forme d'entonnoir.

8. Composant de structure suivant l'une des revendications 1 à 7, **caractérisé en ce que** les deux types de cavités (14, 16) s'étendent le long de lignes (20) de liaison fictives, qui sont sensiblement perpendiculaires entre elles et qui sont à de mêmes distances entre elles.

9. Composant de structure suivant l'une des revendications 1 à 8, **caractérisé en ce que** les cavités du deuxième type (16) ont en section transversale une forme rectangulaire, notamment carrée.

10. Composant de structure suivant l'une des revendications 1 à 9, **caractérisé en ce que** les cavités du premier type (14) sont délimitées par des segments de paroi en saillie, qui s'étendent au moins en partie le long de lignes (26) de démarcation, qui forment à l'intérieur de la une couche (10) de structure des segments (28) de surface en forme de nervure.

11. Composant de structure suivant l'une des revendications 1 à 10, **caractérisé en ce que** les cavités du premier type (14) pénètrent dans des intervalles libres entre les cavités du deuxième type (16) et celles-ci à leur tour dans les intervalles libres des cavités du premier type (14).

12. Composant de structure suivant l'une des revendications 1 à 11, **caractérisé en ce qu'**au moins une couche (40) isolante est introduite entre les deux couches (10, 12) de structure.

13. Composant de structure suivant l'une des revendications précédentes, **caractérisé en ce que** les parties (30, 32) de surface des couches (10, 12) de structure s'étendent parallèlement entre elles et ont entre elles un intervalle de montage de même forme.
